# EUROPÄISCHE PATENTSCHRIFT

(11) **EP 2 316 709 B1**
(45) Veröffentlichungstag und Bekanntmachung des Hinweises auf die Patenterteilung: **21.08.2013**
(21) Anmeldenummer: 10013615.9
(22) Anmeldetag: 13.10.2010
(51) Int. Cl.: B62D 15/02, B62D 1/00, B60L 15/20

(54) **Kraftfahrzeug, externe Steuerungsvorrichtung sowie Verfahren zum Durchführen eines Ausparkvorgangs eines Kraftfahrzeugs**
Motor vehicle, external control device and method for moving a motor vehicle out of a parking place
Véhicule automobile, dispositif de commande externe et procédé d'exécution d'un processus de sortie d'une place de stationnement d'un véhicule automobile

(30) Priorität: 30.10.2009 DE 102009051463
(43) Veröffentlichungstag der Anmeldung: 04.05.2011
(73) Patentinhaber: Audi AG, 85045 Ingolstadt (DE)
(72) Erfinder: Freyer, Jörn, 81827 München (DE); Brenneis, Oliver, 85748 Garching (DE); Hantschke, Christopher, 85080 Gaimersheim (DE); Stadel, Benjamin, 85051 Ingolstadt (DE); Ullman, Stefan, 80797 München (DE); Kastl, Andreas, 85092 Kösching (DE); Schindler, Andreas, 85139 Wettstetten (DE)
(74) Vertreter: Thielmann, Frank

(56) Entgegenhaltungen:
- EP-A1- 0 479 735
- DE-A1- 19 817 142
- DE-A1-102008 051 982
- JP-A- 2006 256 382
- JP-A- 2007 295 033
- JP-A- 2008 174 192

## Beschreibung

Die Erfindung betrifft ein Kraftfahrzeug mit einer zugeordneten externen Steuerungsvorrichtung und einem Park-Lenk-Assistenzsystem umfassend eine kraftfahrzeugseitige Steuerungseinrichtung, wobei die externe Steuerungsvorrichtung zur Kommunikation mit der kraftfahrzeugseitigen Steuerungseinrichtung ausgebildet ist und die kraftfahrzeugseitige Steuerungseinrichtung unter Berücksichtigung der im Rahmen der Kommunikation übertragenen Signale zur Ermittlung einer Ortsinformation über den Aufenthaltsort des Fahrers und/oder einen vom Fahrer vorgegebenen Zielort ausgebildet ist, wobei ein durch die kraftfahrzeugseitige Steuerungseinrichtung gesteuerter Ausparkvorgang unter Berücksichtigung der Ortsinformation durchführbar ist.

Ein Park-Lenk-Assistenzsystem ist bekanntermaßen ein Fahrerassistenzsystem, das das automatische oder semiautomatische Ein- bzw. Ausparken eines Kraftfahrzeugs ermöglicht. Derartige Park-Lenk-Assistenzsysteme umfassen eine kraftfahrzeugseitige Steuerungseinrichtung zum Steuern des Ein- oder Ausparkvorgangs, wobei die Steuerungseinrichtung auf die Signale wenigstens eines kraftfahrzeugseitigen Sensors zurückgreift. Als Sensoren werden üblicherweise Kameras, Ultraschallsensoren, Infrarotsensoren oder auch Radarsensoren verwendet.

Bei automatischen Park-Lenk-Assistenzsystemen wird der Ein- oder Ausparkvorgang von der kraftfahrzeugseitigen Steuerungseinrichtung alleine gesteuert, während bei semiautomatischen Park-Lenk-Assistenzsystemen der Fahrer beispielsweise Gas gibt und bremst.

Weiterhin ist es bekannt, automatische Ausparkvorgänge mit einem dem Kraftfahrzeug zugeordneten Schlüssel zu starten. Dabei wird das Kraftfahrzeug ohne Eingriffsmöglichkeiten des Fahrers ausgeparkt

JP 2007 295033 A offenbart eine über ein, insbesondere als Mobiltelefon ausgebildetes, Endgerät fernsteuerbare Steuereinrichtung als Teil eines Kraftfahrzeugs. Der Steuereinrichtung sind in einem Steuerabschnitt mehrere Einrichtungen zugehörig, wobei über eine Endgerätepositionsbestimmungseinrichtung die Position des Endgeräts relativ zu dem Kraftfahrzeug ermittelt werden kann. Über eine die seitens des Endgeräts an die kraftfahrzeugseitige Steuereinrichtung übermittelten Befehle verarbeitende Ausführungseinrichtung werden, sofern seitens der Endgerätepositionsbestimmungseinrichtung das Endgerät als in einem bestimmten Bereich um das Kraftfahrzeug befindlich erkannt wird, entsprechende Steuerbefehle an das Kraftfahrzeug gegeben, auf Basis welcher über ein Parkassistenzsystem ein automatischer Parkvorgang des Kraftfahrzeugs erfolgen kann.

Der Erfindung liegt die Aufgabe zugrunde, ein Kraftfahrzeug anzugeben, bei dem der Ausparkvorgang besser auf die Wünsche des Fahrers abstimmbar ist.

Zur Lösung der Aufgabe ist bei einem Kraftfahrzeug der eingangs genannten Art erfindungsgemäß vorgesehen, dass die externe Steuerungsvorrichtung einen bildgebenden Sensor und das Kraftfahrzeug wenigstens zwei durch den bildgebenden Sensor erfassbare Marker aufweist, wobei die externe Steuerungsvorrichtung zur Auswertung der Bilddaten des bildgebenden Sensors und zur Ermittlung der Ortsinformation unter Berücksichtigung des Auswertungsergebnisses ausgebildet ist.

Im Rahmen eines automatischen Ausparkvorgangs berücksichtigt die kraftfahrzeugseitige Steuerungseinrichtung bisher lediglich die Sensordaten kraftfahrzeugseitiger Sensoren sowie gegebenenfalls das Startsignal, das mit einem Kraftfahrzeugschlüssel gegeben werden kann. Erfindungsgemäß berücksichtigt die kraftfahrzeugseitige Steuerungseinrichtung zusätzlich eine Ortsinformation über den Aufenthaltsort des Fahrers und/oder einen vom Fahrer vorgegebenen Zielort. Somit beeinflusst der Fahrer den Ausparkvorgang über seinen Aufenthaltsort beziehungsweise den Zielort. Dadurch lassen sich zielgenauere automatisierte Parkvorgänge realisieren.

Vorzugsweise kann die externe Steuerungsvorrichtung als Schlüssel, Brille, Uhr oder als mobile Kommunikationseinrichtung, insbesondere als Mobiltelefon oder mobiles Medienabspielgerät, ausgebildet sein. Als externe Steuerungsvorrichtung können alle bekannten Vorrichtungen verwendet werden, die zur Ansteuerung oder Fernsteuerung eines Kraftfahrzeugs bekannt sind. Dazu zählen auch PDAs und Laptops.

Mit besonderem Vorteil können die externe Steuerungsvorrichtung und das Kraftfahrzeug einen oder mehrere GPS-Sensoren aufweisen, mit denen die Ortsinformation ermittelbar ist. Alternativ zu einer Ausgestaltung als Schlüssel kann die externe Steuerungsvorrichtung somit grundsätzlich ein GPS-Gerät sein, das zur Kommunikation mit dem Kraftfahrzeug aufgerüstet wird. Andererseits sind GPS-Sensoren derart miniaturisiert, dass grundsätzlich jede Vorrichtung, die ein Fahrer gewöhnlich bei sich trägt, als externe Steuerungsvorrichtung vorstellbar ist, beispielsweise auch eine Uhr.

Bei Verwendung eines GPS-Sensors übermittelt die externe Steuerungsvorrichtung eine absolute Ortsinformation, die von der kraftfahrzeugseitigen Steuerungseinrichtung in eine relative Ortsinformation umgerechnet werden kann. Denn der Ausparkvorgang wird nicht durch die absolute Positionierung des Fahrers beeinflusst, sondern vielmehr durch die Relativposition zum Kraftfahrzeug. Dementsprechend muss auch das Kraftfahrzeug einen eigenen GPS-Sensor besitzen, damit die kraftfahrzeugseitige Steuerungseinrichtung aus zwei absoluten Ortsinformationen eine relative Ortsinformation berechnen kann. Eine relative Ortsinformation ist dabei nochmals aufgeteilt in eine Entfernungsinformation und eine Winkelinformation, wobei die Winkelinformation den Winkel des Fahrers bezogen auf die Kraftfahrzeuglängsachse angibt. Bestimmte Winkelangaben werden dabei einfach per Definition festgelegt. Beispielsweise kann einem in der Mitte vor dem Kraftfahrzeug befindlichen Fahrer ein Wert von 0° zugeordnet werden, während der Position in der Mitte hinter dem Kraftfahrzeug dementsprechend ein Wert von 180° zugeordnet wird. Die Positionen rechts und links der Mitte des Kraftfahrzeugs entsprechen dann den Winkeln 90° und 270°, alle Zwischenwerte werden entsprechend gebildet.

In einer anderen Ausgestaltung kann die externe Steuerungsvorrichtung zum kontinuierlichen oder intermittierenden Aussendung eines Signals an das Kraftfahrzeug ausgebildet sein, das Kraftfahrzeug wenigstens zwei, insbesondere drei, Sensoren zum Erfassen des Signals aufweisen und die kraftfahrzeugseitige Steuerungseinrichtung zur Ermittlung der Ortsinformation unter Berücksichtigung der Sensorinformationen ausgebildet sein. Die Bestimmung der relativen Positionierung des Fahrers zum Kraftfahrzeug ist auch ohne die Verwendung absoluter Ortsinformationen selbstverständlich möglich. Zu einer präzisen Positionsbestimmung benötigt das Kraftfahrzeug drei Sensoren, die durch die externe Steuerungsvorrichtung ausgesandte Signale erfassen können. Aus den Sensordaten der drei Sensoren kann mittels Hyperbelnavigation dann die Ortsinformation über den Aufenthaltsort des Fahrers exakt ermittelt werden. Je nach erforderlicher Genauigkeit genügen aber bereits zwei Sensoren, wenn die dadurch gewonnene Ortsinformation aufgrund der Sensordaten anderer Sensoreinrichtungen ergänzt werden kann. Bei der Verwendung von lediglich zwei Sensoren ergibt sich nämlich das Problem, dass der Aufenthaltsort des Fahrers lediglich auf eine Hyperbel reduziert werden kann. Auch ist die Reichweite des Senders begrenzt. In diesem Fall können dann die Sensordaten beispielsweise eines Ultraschallsensors oder eines Radarsensors ergänzend hinzugezogen werden, um die Ortsinformation zu präzisieren.

Die externe Steuerungsvorrichtung weist einen bildgebenden Sensor und das Kraftfahrzeug wenigstens zwei durch den bildgebenden Sensor erfassbare Marker auf, wobei die externe Steuerungsvorrichtung zur Auswertung der Bilddaten des bildgebenden Sensors und zur Ermittlung der Ortsinformation unter Berücksichtigung des Auswertungsergebnisses ausgebildet ist. Die externe Steuerungsvorrichtung übermittelt also nicht nur ein Signal, sondern bereits die vollständige Ortsinformation. Diese wird mittels des bildgebenden Sensors gewonnen. Mit besonderem Vorzug kann der bildgebende Sensor eine Infrarotkamera sein und die Marker können Infrarotmarker sein. Dadurch sind die von den Markern ausgesandten Signale für das menschliche Auge unsichtbar, weshalb sie als weniger störend empfunden werden. Durch die geschickte Anordnung der Marker kann bereits mit vier Markern die Ortsinformation aus jeder beliebigen Richtung gewonnen werden. Hierzu sind die Marker jeweils an vertikalen Kanten des Kraftfahrzeugs anzubringen, wobei sie paarweise in Nähe des Kraftfahrzeugdachs und der Kraftfahrzeugunterseite anzubringen sind. Aufgrund der mit dem bildgebenden Sensor aufgenommenen Signalintensitäten kann ein Abstand grob berechnet werden, weshalb aus den Positionen der Marker unter Berücksichtigung der Tatsache, dass ein Kraftfahrzeug länger als breit ist, die Seite des Kraftfahrzeugs festgestellt werden kann, auf der sich der Fahrer befindet. Über die Gesetzmäßigkeiten des Strahlen satzes kann bei bekanntem absoluten Abstand der Marker dann die Entfernung des Fahrers zum Kraftfahrzeug sowie seine Positionierung genau bestimmt werden. Die Ermittlung der Ortsinformationen über die vier Marker ist dabei selbstverständlich nicht auf die Verwendung von Infrarotmarkern beschränkt, vielmehr ist dies mit jedem denkbaren Marker möglich.

In einer weiteren Ausführungsform kann das Kraftfahrzeug eine Kamera aufweisen und die kraftfahrzeugseitige Steuerungseinrichtung zur Auswertung der mit der Kamera aufgenommenen Bilddaten ausgebildet sein, um eine aus Handzeichen des Fahrers abgeleitete Steuerungsinformation für den Ausparkvorgang zu ermitteln. Zusätzlich zur Ortsinformation, also dem Aufenthaltsort des Fahrers, kann der Fahrer zusätzliche Steuerungsinformationen an das Kraftfahrzeug übermitteln, um den Ausparkvorgang auch ohne Schlüsselbetätigung starten und unterbrechen zu können. Hierbei kann die kraftfahrzeugseitige Steuerungseinrichtung zweckmäßigerweise vorgegebene Handzeichen erkennen, die der Fahrer zur Steuerung des Ausparkvorgangs erlernen muss. Die Handzeichen können dabei so ausgestaltet sein, dass der Fahrer die Hand- bzw. Armstellung von einer ersten zu einer zweiten Position wechselt, um in der zweiten Position zu verharren. Alternativ kann auch ein ständiger Wechsel von einer ersten in eine zweite Position vorgesehen sein, um dem Kraftfahrzeug eine bestimmte Anweisung mitzuteilen.

Zur Gabe von Steuerungsinformationen mittels Handzeichen benötigt man ein Handzeichen zum Starten und/oder zum Unterbrechen des Ausparkvorgangs. Beispielsweise kann der Fahrer den Ausparkvorgang starten, indem er das Kraftfahrzeug buchstäblich zu sich herwinkt. Die Winkgeschwindigkeit kann dabei gleichzeitig ein Maß für die Geschwindigkeit des Ausparkvorgangs darstellen. Als Stoppsignal zum Unterbrechen des Ausparkvorgangs vor dessen Beendigung kommt eine Position des Fahrers in Betracht, bei der die geöffnete Hand weit vor sich gestreckt wird. Alternativ kann der Fahrer den Arm nach oben strecken. Die Positionierung des Fahrers bezogen auf das Kraftfahrzeug ist dabei grundsätzlich beliebig, er muss lediglich von der Kamera des Kraftfahrzeugs erfassbar sein. Sobald das Kraftfahrzeug also die Anwesenheit des Fahrers bemerkt oder mitgeteilt bekommen hat, kann der Fahrer das Fahrzeug herbeiwinken. Da der Fahrer auch jederzeit die Möglichkeit hat, den Ausparkvorgang durch ein Handzeichen zu unterbrechen, wird der Ausparkvorgang noch sicherer.

Statt mit Handzeichen kann die Steuerungsinformation auch über Kopfbewegungen übermittelt werden. Auch die Kopfbewegungen werden mit der Kamera am Kraftfahrzeug erfasst.

Alternativ kann die externe Steuerungsvorrichtung einen Handzeichen des Fahrers als Sensordaten sensierenden Beschleunigungssensor aufweisen, wobei eine aus den Sensordaten abgeleitete Steuerungsinformation durch die kraftfahrzeugseitige Steuerungseinrichtung zur Steuerung des Ausparkvorgangs verwendbar ist. Mit der Steuerungsinformation kann der Ausparkvorgang gestartet oder unterbrochen werden.

In einer anderen Ausgestaltung kann das Kraftfahrzeug eine Kamera aufweisen und die externe Steuerungseinrichtung zur Gabe eines Laserlichtpunktes ausgebildet sein, wobei die kraftfahrzeugseitige Steuerungseinrichtung zur Auswertung der mit der Kamera aufgenommenen Bilddaten ausgebildet ist und ein in den Bilddaten abgebildeter Laserlichtpunkt als vom Fahrer vorgegebener Zielort interpretierbar ist. Die Vorgabe des Zielorts umfasst dabei die Beleuchtung eines einzelnen Punktes wie auch die Vorgabe des gesamten Ausparkwegs durch Abfahren des Ausparkwegs mit dem Laserlicht.

Zusätzlich oder alternativ können die externe Steuerungsvorrichtung und das Kraftfahrzeug jeweils einen digitalen Kompass enthalten und die kraftfahrzeugseitige Steuerungseinrichtung zur Ermittlung der Ortsinformation unter Berücksichtigung der Daten der digitalen Kompanten ausgebildet sein. Hierzu ist der digitale Kompass des Fahrers am Kraftfahrzeug auszurichten. Mittels der digitalen Kompanten lässt sich lediglich eine Richtungsinformation gewinnen. Diese ist oft allerdings ausreichend, um den Ausparkvorgang sinnvoll beeinflussen zu können. Das Kraftfahrzeug kann nämlich sowieso nicht auf beliebige Arten ausgeparkt werden, vielmehr wird es sowohl beim seitlichen wie auch beim geraden oder schrägen Ausparken zur Straße hin ausgeparkt. Dadurch kann auch aus den Richtungsinformationen der digitalen Kompanten eine Ortsinformation abgeleitet werden. Besonders effektiv befindet sich der digitale Kompass dabei in der Brille des Fahrers, wodurch der Fahrer das Kraftfahrzeug mit Kopfbewegungen steuern kann.

Vorzugsweise kann die externe Steuerungsvorrichtung eine Informationseinrichtung aufweisen, mit der dem Fahrer eine Rückmeldungsinformation über den Empfang der Ortsinformation durch die kraftfahrzeugseitige Steuerungseinrichtung gebbar ist. Zweckmäßigerweise kann die Rückmeldungsinformation eine akustische und/oder haptische und/oder optische Rückmeldungsinformation sein. Durch die Rückmeldungsinformation wird verhindert, dass der Fahrer unter der Annahme, dass die Ortsinformation oder die Steuerungsinformation beim Kraftfahrzeug bzw. der kraftfahrzeugseitigen Steuerungseinrichtung noch nicht angekommen ist, diese Information nochmals versucht zu übermitteln. Andererseits kann dem Fahrer so mitgeteilt werden, dass das Kraftfahrzeug seine Anwesenheit bemerkt hat, wodurch er indirekt zur Gabe von Handzeichen aufgefordert wird. Hierfür sind insbesondere akustische und haptische Rückmeldungsinformationen besonders geeignet, da diese vom Fahrer auch bemerkt werden, wenn er die externe Steuerungsvorrichtung nicht in der Hand hält bzw. die externe Steuerungsvorrichtung anschaut. Bei Verwendung eines Mobiltelefons ist es beispielsweise denkbar, für die Rückmeldungsinformation einen besonderen Klingelton auszuwählen. Somit muss der Fahrer das Mobiltelefon nicht einmal aus der Hosen- oder Jackentasche nehmen, um an die Rückmeldungsinformation zu gelangen. Vielmehr kann der Fahrer sofort mit der Handzeichengabe beginnen.

Vorzugsweise kann die kraftfahrzeugseitige Steuerungseinrichtung zur Kommunikation mittels Bluetooth oder WPA mit der externen Steuerungsvorrichtung ausgebildet sein. Diese Verfahren ermöglichen eine Verschlüsselung der Kommunikation, weshalb nur der Fahrer Zugriff auf die Steuerung des Kraftfahrzeugs erhält. Dies dient selbstverständlich der allgemeinen Sicherheit.

Daneben betrifft die Erfindung auch eine externe Steuerungsvorrichtung für ein Kraftfahrzeug mit einem Park-Lenk-Assistenzsystem umfassend eine kraftfahrzeugseitige Steuerungseinrichtung, wobei die externe Steuerungsvorrichtung zur Kommunikation mit der kraftfahrzeugseitigen Steuerungseinrichtung ausgebildet ist, um im Rahmen der Kommunikation der kraftfahrzeugseitigen Steuerungseinrichtung eine Ortsinformation über den Aufenthaltsort des Fahrers ermittelbar zu machen, wobei ein durch die kraftfahrzeugseitige Steuerungseinrichtunggesteuerter Ausparkvorgang unter Berücksichtigung der Ortsinformation kontrollierbar ist. Die externe Steuerungsvorrichtung zeichnet sich dadurch aus, dass sie einen bildgebenden Sensor aufweist, um wenigstens zwei durch den bildgebenden Sensor erfassbare, am Kraftfahrzeug angeordnete, Marker zu erfassen, wobei die externe Steuerungsvorrichtung zur Auswertung der Bilddaten des bildgebenden Sensors und zur Ermittlung der Ortsinformation unter Berücksichtigung des Auswertungsergebnisses ausgebildet ist.

Bezüglich vorteilhafter Ausgestaltungen der externen Steuerungsvorrichtung wird auf die Unteransprüche verwiesen, die dadurch erreichten Vorteile können der Beschreibung weiter oben entnommen werden.

Daneben betrifft die Erfindung ein Verfahren zum Durchführen eines Ausparkvorgangs eines Kraftfahrzeugs mit einer zugeordneten externen Steuerungsvorrichtung und einem Park-Lenk-Assistenzsystem umfassend eine kraftfahrzeugseitige Steuerungseinrichtung, wobei die externen Steuerungsvorrichtung mit der kraftfahrzeugseitigen Steuerungseinrichtung kommuniziert und die kraftfahrzeugseitige Steuerungseinrichtung unter Berücksichtigung der Kommunikation eine Ortsinformation über den Aufenthaltsort des Fahrers ermittelt, wobei die kraftfahrzeugseitige Steuerungseinrichtung den Ausparkvorgang unter Berücksichtigung der Ortsinformation steuert. Das Verfahren zeichnet sich dadurch aus, dass die externe Steuerungsvorrichtung einen bildgebenden Sensor aufweist, um wenigstens zwei durch den bildgebenden Sensor erfassbare, am Kraftfahrzeug angeordnete, Marker zu erfassen, wobei die externe Steuerungsvorrichtung zur Auswertung der Bilddaten des bildgebenden Sensors und zur Ermittlung der Ortsinformation unter Berücksichtigung des Auswertungsergebnisses ausgebildet ist.

Auch das Verfahren kann im Rahmen der oben bereits aufgeführten Ausgestaltungen weitergebildet werden, um die jeweils dargestellten Vorteile zu erzielen.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: ein Kraftfahrzeug mit einem zugeordneten Schlüssel,
- Fig. 2: die Prinzipskizze eines seitlichen Parkvorgangs,
- Fig. 3: die Prinzipskizze eines Parallelparkvorgangs,
- Fig. 4: die Prinzipskizze eines seitlichen Parkvorgangs,
- Fig. 5: die Darstellung eines erfolgten Ausparkvorgangs mit einem erfindungsgemäßen Kraftfahrzeug
- Fig. 6: die Prinzipskizze eines Ausparkvorgangs in einer zweiten Ausgestaltung,
- Fig. 7: ein Kraftfahrzeug mit Empfängern,
- Fig. 8: einen Schlüssel,
- Fig. 9: eine Handbewegung zur Kraftfahrzeugkontrolle,
- Fig. 10: ein Handzeichen zur Kraftfahrzeugkontrolle,
- Fig. 11: ein Handzeichen zur Kraftfahrzeugkontrolle in einer zweiten Ausgestaltung,
- Fig. 12: die Kontrolle eines Ausparkvorgangs mit Handzeichen,
- Fig. 13: die Prinzipskizze zu Beginn eines mit Digitalkompass kontrollierten Ausparkvorgangs,
- Fig. 14: die Prinzipskizze der Achsenverteilung eines Kraftfahrzeugs, und
- Fig. 15: die Prinzipskizze zum Ende eines mittels Digitalkompass kontrollierten Ausparkvorgangs.

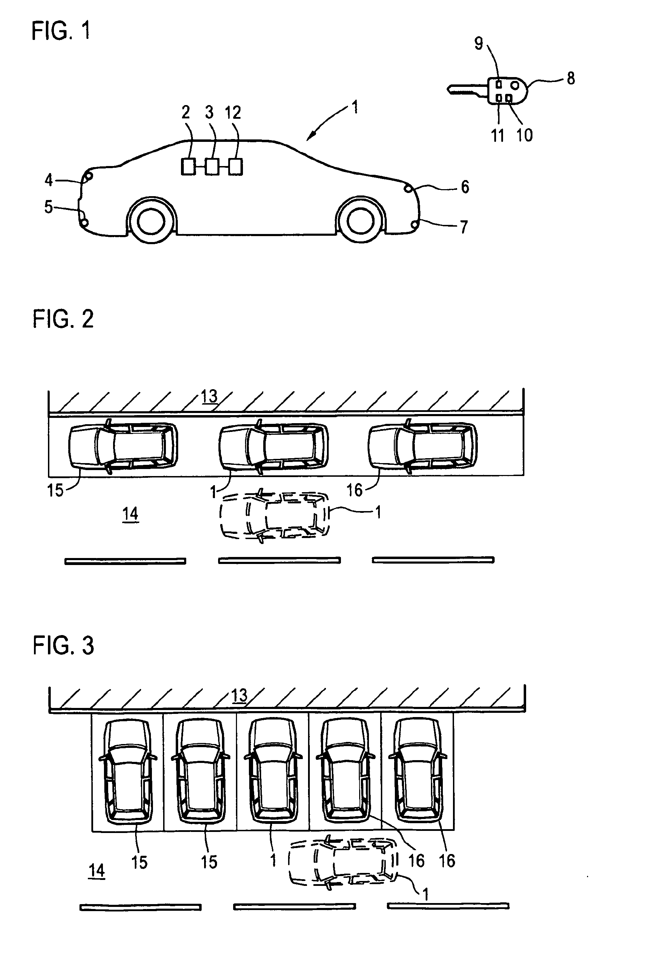

Fig. 1 zeigt ein erfindungsgemäßes Kraftfahrzeug 1 mit einem Park-Lenk-Assistenzsystem 2 umfassend eine kraftfahrzeugseitige Steuerungseinrichtung 3 sowie mehrere Sensoren, nämlich die Ultraschallsensoren 4 und 6 sowie die Radarsensoren 5 und 7. Diesem Kraftfahrzeug ist ein Schlüssel 8 zugeordnet, der einen Sender 9 und einen GPS-Sensor 10 aufweist. Weiterhin ist eine Vibrationseinrichtung 11 mit Empfänger vorhanden. Auch das Kraftfahrzeug 1 besitzt einen GPS-Sensor 12 oder auch mehrere GPS-Sensoren.

Der Schlüssel 8 wie auch alle anderen mobilen externen Steuerungseinrichtungen, weist zumindest einen Sender 9 zum Übertragen eines Signals an das Kraftfahrzeug 1 auf. Für den Fall, dass der Schlüssel 8 eine Rückmeldungsinformation anzeigen kann, muss er selbstverständlich auch einen Empfänger vorweisen.

Die Kommunikation zwischen Schlüssel 8 und Park-Lenk-Assistenzsystem 2 bzw. seiner Steuerungseinrichtung 3 erfolgt dabei mittels Bluetooth oder WPA. Bluetooth ist ein Industriestandard für die Funkvernetzung von Geräten über kurze Distanzen. Die Reichweite beträgt bis zu 100 Meter und ist somit völlig ausreichend für die angestrebte Kommunikation. Insbesondere kann die Schnittstelle der kraftfahrzeugseitigen Steuerungseinrichtung 3 so konfiguriert werden, dass nur ein Verbindungsaufbau mit einem dem Kraftfahrzeug 1 zugeordneten Schlüssel 8 möglich ist. Dadurch kann ein Fremdzugriff auf das Kraftfahrzeug 1 verhindert werden.

WPA ist die bekannte Abkürzung für den Wi-Fi-Protected Access. Dabei handelt es sich um eine Verschlüsselungsmethode für drahtlose Netzwerke. Neben Bluetooth und WPA können selbstverständlich auch alle anderen Ausgestaltungsmöglichkeiten für drahtlose Netzwerke und Verschlüsselungsmethoden hierfür angewandt werden.

Die Fig. 2 - 4 zeigen typische Parksituationen. Generell wird das Kraftfahrzeug 1 auf der Straße 14 und neben dem Gehsteig 13 geparkt. Die Ausrichtung zum Gehsteig 13 und zu den das Kraftfahrzeug umgebenden, weiteren Kraftfahrzeugen 15 und 16 kann aber variieren. Fig. 2 illustriert das seitliche Parken. Das Kraftfahrzeug steht grundsätzlich in Fahrtrichtung und ist durch entsprechendes Rangieren ein- und auszuparken. Die Positionierung nach dem Ausparken ist durch den gestrichelten Umriss dargestellt.

Die entsprechenden Positionen für das Parallelparken zeigt Fig. 3. Dabei weist die Hauptachse des Kraftfahrzeugs im Wesentlichen senkrecht zum Gehsteig 13 bzw. zur Fahrtrichtung. Diese Parkposition ist insbesondere in Parkhäusern und auf Großparkplätzen anzufinden. In diesen Fällen wird das Kraftfahrzeug 1 selbstverständlich nicht am Gehsteig 13 sondern an einer Wand oder Mittellinie positioniert.

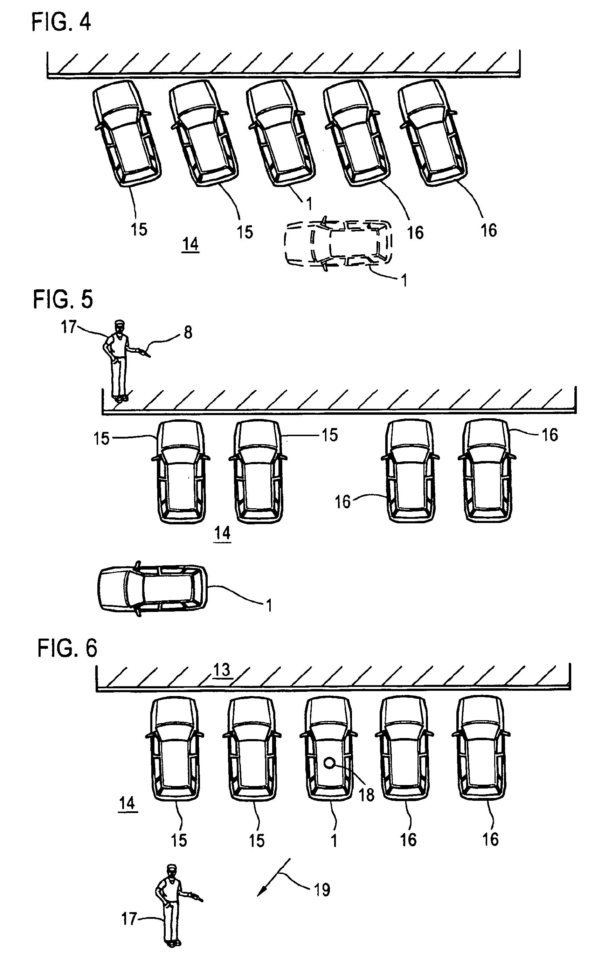

Fig. 4 zeigt eine Variante des Parallelparkens, nämlich das schräge Parken. Durch das leichte Drehen der Parkposition im Vergleich zum Gehsteig 13 oder auch zur Wand eines Parkhauses wird das Ein- und Ausparken des Kraftfahrzeugs 1 erleichtert.

In Fig. 5 ist beispielhaft dargestellt, wie sich mit dem erfindungsgemäßen Kraftfahrzeug 1 zielgenauere Ausparkvorgänge realisieren lassen. Der Fahrer 17 trägt einen Schlüssel 8 bei sich, der einen GPS-Sensor 10 aufweist. Mittels Knopfdruck überträgt der Fahrer 17 die Ortsinformation, die seinen Aufenthaltsort angibt, in Form der GPS-Positionsangabe an das Kraftfahrzeug 1. Die kraftfahrzeugseitige Steuerungseinrichtung 3, die den Ausparkvorgang kontrolliert, versteht dieses Signal gleichzeitig als Aufforderung zum Starten des Ausparkvorgangs und beginnt dementsprechend mit dem Ausparkvorgang. Dieser wird jedoch nicht, wie in Fig. 3 abgebildet war, bei der Standardausparkposition beendet, vielmehr wird das Kraftfahrzeug 1 noch in Richtung des Fahrers 17 hinbewegt. Am Schlüssel 8 befindet sich auch eine Taste zum Senden eines Abbruchsignals, mit dem der Ausparkvorgang jederzeit unterbrochen werden kann. Dies geschieht, da der Fahrer 17 jederzeit die Kontrolle über das Kraftfahrzeug 1 haben sollte und somit auch automatisch ablaufende Vorgänge abbrechen können sollte.

Alternativ kann auch ein einziger Knopf beziehungsweise eine einzige Taste vorgesehen sein, die ähnlich wie ein Totmannschalter funktioniert. Durch Drücken der Taste wird der Ausparkvorgang begonnen und erst unterbrochen, wenn der Tastendruck beendet wird.

Der Abstand des Fahrers 17 vom Kraftfahrzeug 1 ist dabei zuerst einmal beliebig. Begrenzt wird er lediglich durch die Reichweite des Senders der externen Steuerungseinrichtung.

Bei geringen Abständen, nämlich Abständen im Bereich unterhalb von 20 Metern, ist weiterhin zu beachten, dass die Genauigkeit von GPS-Positionsangaben im allgemeinen Fall lediglich in einer Größenordnung von ca. 10 Metern liegt. Ein sinnvolles Herbeiholen des Kraftfahrzeugs ist dann nur bei Abständen von mehr als 20 Metern möglich. Diese Einschränkung kann aber durch das sogenannte differentielle GPS- oder auch dGPS überwunden werden. Bei Vorhandensein einer dGPS-Station liegt die erzielbare Genauigkeit im Bereich eines Zentimeters und ist somit völlig ausreichend für alle möglichen Abstände des Fahrers 17 zum Kraftfahrzeug 1.

Eine Besonderheit bei der Übertragung der GPS-Positionsangabe besteht im Vergleich zu den anderen Ausgestaltungen darin, dass es sich bei der GPS-Positionsangabe um eine absolute Ortsinformation handelt, die zuerst einmal ohne jeden Bezug zum Kraftfahrzeug 1 steht. In diesem Fall muss das Kraftfahrzeug 1 einen eigenen GPS-Sensor 12 besitzen, um die eigene absolute Position feststellen zu können, um aus den beiden Absolutpositionen, nämlich der des Kraftfahrzeugs 1 selbst und des Fahrers 17, die relative Positionierung des Fahrers 17 zum Kraftfahrzeug 1 zu ermitteln. Diese Relativangabe wird dann dazu verwendet, die Fahrtrichtung des Kraftfahrzeugs nach dem Ausparkvorgang festzulegen und das Kraftfahrzeug 1 noch auf der Straße in Richtung des Fahrers 17 zu bewegen.

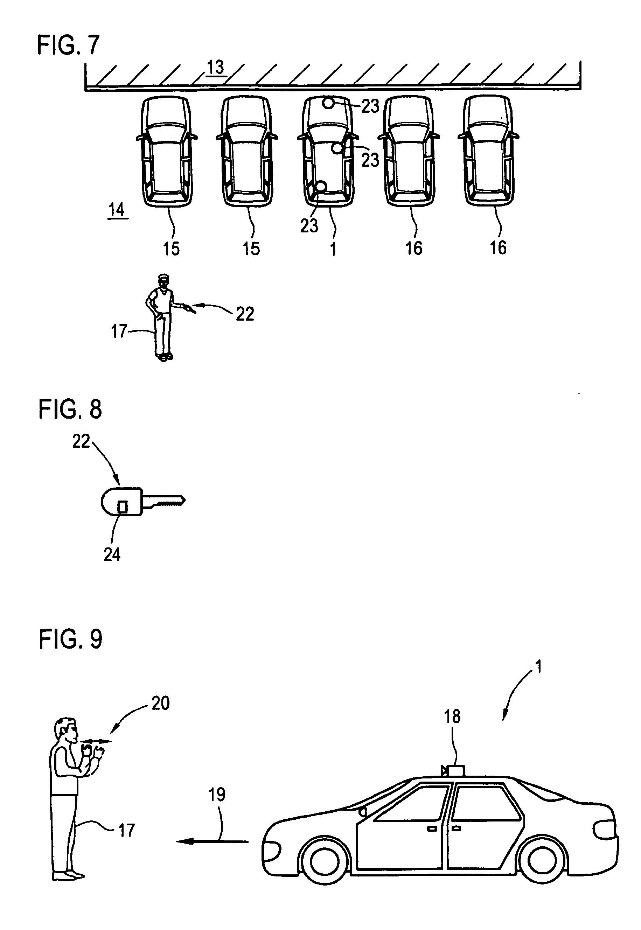

Fig. 6 zeigt eine alternative Ausgestaltung, die ohne GPS-Positionsinformationen auskommt. Wie oben bereits erläutert wurde, kann bei GPS das Problem entstehen, dass bei geringen Abständen zwischen Fahrer 17 und Kraftfahrzeug 1, insbesondere unterhalb von ca. 20 Metern, die Positionsbestimmung zu ungenau erfolgen kann. Alternativ kann daher vorgesehen sein, dass das Kraftfahrzeug 1 selbst die Relativposition zum Fahrer 17 bestimmen kann. Das Kraftfahrzeug weist hierfür, wie in Fig. 7 dargestellt ist, drei Empfänger 23 auf, die es ermöglichen, die Position des Fahrers 17 zu bestimmen. Der Fahrer muss dabei lediglich einen Schlüssel 22 wie in Fig. 8 abgebildet mit einem ein Signal aussendenden Sender 24 bei sich führen. Sobald der Fahrer 17 in den Empfangsbereich der Sensoren 23 eintritt, beginnen diese mit der Positionsbestimmung des Fahrers 17. Der Wunsch des Fahrers 17, den automatischen Ausparkvorgang zu beginnen, wird durch Betätigung eines Startknopfs mitgeteilt. Die kraftfahrzeugseitige Steuerungseinrichtung 3 empfängt dabei die Signale der Empfänger 23, die ihrerseits wiederum die mittels des Schlüssels 22 ausgesendeten Signale empfangen haben. Nach Auswertung dieser Signale steuert die Steuerungseinrichtung 3 den Ausparkvorgang derart, dass das Kraftfahrzeug ähnlich wie in Fig. 3 ausgeparkt wird, wobei allerdings die nach dem Ausparkvorgang eingenommene Ausrichtung des Kraftfahrzeugs von der Position des Fahrers 17 relativ zum Kraftfahrzeug 1 abhängt. Positioniert sich der Fahrer 17 links hinter dem Kraftfahrzeug 1, so weist nach dem Ausparkvorgang die Front des Kraftfahrzeugs 1 in Richtung des Fahrers 17 und somit ebenfalls nach links. Dies ist insbesondere auf Supermarktparkplätzen mit Einbahnstraßenverkehr von Vorteil, da dort eine vorgegebene Fahrtrichtung zu beachten ist. Diese Fahrtrichtung ist für Park-Lenk-Assistenzsysteme im Allgemeinen aber nicht erfassbar. Der Fahrer kann somit durch seine Relativpositionierung zum Kraftfahrzeug den Ausparkvorgang sinnvoll steuern.

Die Verbesserung erfolgt dabei erfindungsgemäß über die Gabe der Ortsposition, die den Aufenthaltsort des Fahrers beschreibt.

Weitere Steuerungsmöglichkeiten erhält der Fahrer 17, wenn dem Kraftfahrzeug 1 weitere Steuerungsinformationen auch von außerhalb des Kraftfahrzeugs 1 zugänglich gemacht werden können. In einer ersten Variante weist das Kraftfahrzeug 1 eine Kamera 18 auf, mit der der Fahrer 17 erfassbar ist. Als Kamera 18 kommen somit alle Arten von Kameras in Betracht, die einen Fahrer 17 in irgendeiner Art und Weise erfassen können, also auch Infrarotkameras und 3D-Kameras. Damit das Kraftfahrzeug 1 über die Kamera 18 nur Steuerungsinformationen des Fahrers 17 erfasst, wurde vor Auswertung der Bilddaten der Kamera 18 die Relativposition des Fahrers 17 zum Kraftfahrzeug 1 ermittelt, was mittels des Pfeils 19 angedeutet ist. Als Steuerungsinformationen werden Handzeichen und Handbewegungen bzw. Armbewegungen verwendet. Fig. 9 zeigt das Heranwinken des Autos mittels der Handbewegung 20, wobei es sich um eine periodisch wiederholte Bewegung handelt. Das Kraftfahrzeug 1 beginnt, gesteuert über die Steuerungseinrichtung 3, den Ausparkvorgang erst nach Erkennen der Handbewegung als Startsignal.

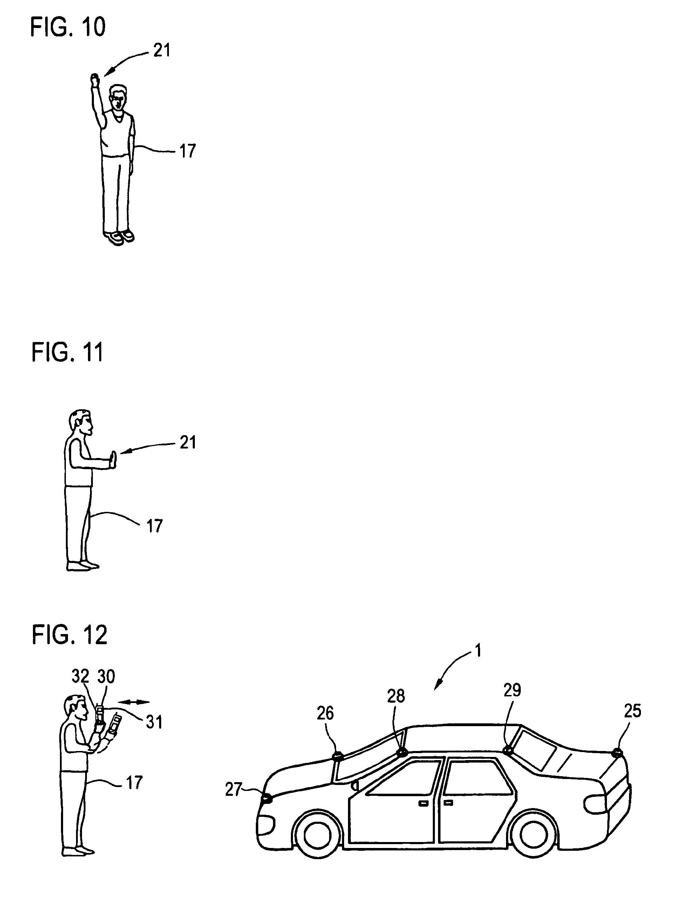

Die Fig. 10 und 11 zeigen zwei verschiedene Handzeichen, die es ermöglichen, den Ausparkvorgang zu unterbrechen. Fig. 10 zeigt den Fahrer 17, der einen Arm senkrecht nach oben streckt. Der Arm hebt sich somit deutlich vom Körper ab und ist auch den Bilddaten der Kamera 18 leicht extrahierbar. Erkennt die Steuerungseinrichtung 3 nach Auswerten der Bilddaten der Kamera 18 ein derartiges Handzeichen, wird der Ausparkvorgang sofort unterbrochen. Ein Neustart erfolgt erst nach der Handzeichengabe wie sie in Fig. 9 abgebildet ist. Ein alternatives Handzeichen zum Abbruch des Parkvorgangs zeigt Fig. 11. Dabei streckt der Fahrer 17 die geöffnete Hand mit gestrecktem Arm vor sich.

Statt dieser Handbewegungen und Handzeichen sind selbstverständlich auch andere Ausgestaltungen der Handbewegungen und Handzeichen an sich, aber auch bezüglich des zur Gabe der Zeichen benutzten Körperteils denkbar. Beispielsweise kann das Kraftfahrzeug auch über Kopfbewegungen mit Steuerungsinformationen versehen werden. Wichtig ist lediglich, dass die zu verwendenden Handzeichen beziehungsweise Kopfbewegungen bei der Auswertung der Bilddaten leicht ermittelbar sind und keine Fehlinterpretationen erlauben.

Grundsätzlich werden die Handbewegungen dabei vom Kraftfahrzeughersteller vorgegeben. Zwar ist es prinzipiell denkbar, dass der Fahrer 17 über die Kamera 18 dem Kraftfahrzeug 1 von ihm selbst ausgewählte Handbewegungen anlernt, allerdings muss die Steuerungseinrichtung 3 dann automatisch anpassbar sein, um entsprechende Handbewegungen erkennen zu können. Auch können die dem Kraftfahrzeug 1 so beigebrachten Handzeichen oder Handbewegungen eventuell falsch interpretierbar sein, was zu vermeiden ist. Die Übermittlung von Handzeichen lässt sich statt der Verwendung einer Kamera 18 am Kraftfahrzeug 1 auch dahingehend realisieren, dass sich am Schlüssel 22 ein Beschleunigungssensor 32 befindet. Dieser kann grundsätzlich Bewegungen in allen translatorischen und rotatorischen Richtungen unterscheiden und aus den Beschleunigungswerten auch entsprechende Wegstrecken der Handbewegung berechnen. Insbesondere lassen sich die in den Fig. 9 - 11 gezeigten Handzeichen und -bewegungen deutlich voneinander unterscheiden. In diesem Fall sendet der Sender 24 des Schlüssels 22 nicht nur ein einfaches Signal, sondern die Signaldaten des Beschleunigungssensors 32. Dabei werden selbstverständlich entsprechende Schwellwerte vorgegeben, dass nicht ein einfaches Wackeln des Schlüssels 22 genügt, um versehentlich einen Ausparkvorgang des Kraftfahrzeugs 1 auszulösen.

Eine Verbesserung dieser Ausgestaltung sieht vor, dass am Schlüssel 22 eine Infrarotkamera 31 sowie am Kraftfahrzeug 1 die Infrarotmarker 25 - 29 vorgesehen sind. Die Infrarotmarker 25 - 29 werden an den Kanten oder Ecken des Kraftfahrzeugs 1 so verteilt, dass ein Infrarotmarker 25 - 29 mindestens von zwei angrenzenden Seiten aus abbildbar ist. Die Infrarotmarker 25 und 26 auf der rechten Seite befinden sich im unteren Fahrzeugbereich, insbesondere am Kotflügel der Beifahrerseite und in der Nähe des Kofferraumdeckels. Auf der Fahrerseite sind die Infrarotmarker 28 und 29 dagegen an den Dachecken angebracht. Aufgrund der unterschiedlichen Positionierung der Infrarotmarker ist es nach Aufnahme eines Bildes mit der Infrarotkamera 31 möglich, die Relativposition des Fahrers 17 zum Kraftfahrzeug 1 zu bestimmen. In einem ersten Schritt wird anhand der Signalintensitäten der im Bild dargestellten Infrarotmarker die Seite des Kraftfahrzeugs 1 bestimmt, auf der sich der Fahrer 17 befindet. Hierbei werden nur die Signalintensitäten der zwei stärksten Signale berücksichtigt. Der Fahrer 17 kann sich dann im Wesentlichen rechts oder links seitlich, vorne, hinten oder auch schräg zum Kraftfahrzeug 1 befinden. Im ersten Schritt erfolgt also eine Winkelbestimmung des Winkels, den der Fahrer 17 im Vergleich zur Hauptachse des Kraftfahrzeugs 1 einnimmt. Ausgehend von dieser Winkelangabe kann unter Ausnutzung des bekannten Abstands der Infrarotmarker 25 - 29 noch der Abstand des Fahrer 17 vom Kraftfahrzeug 1 mit Hilfe des Strahlensatzes berechnet werden. Dabei kann der berechnete Abstand mittels der Signalintensitäten der Infrarotmarker 25 - 29 verifiziert werden. Nach dieser Bestimmung der Relativposition ist es möglich, über den Schlüssel 22 auch die Relativposition des Fahrer 17 zum Kraftfahrzeug 1 an das Kraftfahrzeug 1 bzw. seiner Steuerungseinrichtung 3 zu senden. Diese Positionsbestimmung ist dabei von der Verwendung des Beschleunigungssensors 32 unabhängig und stellt somit eine Alternative zur Bestimmung der Relativposition wie bezüglich den Fig. 6 - 8 beschrieben dar. Allerdings ist diese Art der Bestimmung der Relativposition im Zusammenspiel mit einem Beschleunigungssensor 32 besonders interessant, da bei dieser Ausgestaltung der Beschleunigungssensor 32 über ein größeres Bestimmungspotential der Beschleunigungsrichtungen verfügt. Ohne die Infrarotkamera 31 sind mittels des Beschleunigungssensors 32 lediglich die Vertikal- und die Horizontalbewegung zu unterscheiden bzw. entsprechende Komponenten einer Bewegung, mit Infrarotkamera 31 kann hinsichtlich der Horizontalbewegung noch einmal aufgetrennt werden in Bewegungen in Richtung des Kraftfahrzeugs 1 und Bewegungen senkrecht hierzu. Dementsprechend kann der Beschleunigungssensor 32 drei Bewegungsachsen unterscheiden und kann als triachsialer Beschleunigungssensor 32 eingesetzt werden. Dies erlaubt ein verbessertes Erkennen von Handzeichen und Handbewegungen.

Unabhängig davon, ob die Steuerungsinformationen mittels einer Kamera 18 oder eines Beschleunigungssensors 32 erfasst werden, ist es in beiden Fällen möglich, dass der Ausparkvorgang lediglich dahingehend modifiziert wird, dass die Ausrichtung des Kraftfahrzeugs 1 nach dem Ausparkvorgang festlegbar ist. In dem Fall dienen die Steuerungsinformationen in Form der Handzeichen lediglich zum Starten und Stoppen des Ausparkvorgangs, wobei das Kraftfahrzeug 1 lediglich aus dem Parkplatz herausfährt und dann nach erfolgter Ausrichtung automatisch abgestellt wird. Es ist aber auch möglich nach dem Herausfahren aus der Parklücke das Kraftfahrzeug 1 noch weiter auf den Fahrer 17 zuzubewegen und dabei auch Distanzen von mehreren dutzend Metern zu überbrücken.

Als Alternative zur Gabe von Handzeichen oder Handbewegungen ist es auch möglich, dem Kraftfahrzeug mittels eines Lasers eine Ortsinformation zu übermitteln. Mit dem Laser wird am Boden ein Zielpunkt vorgegeben, den das Kraftfahrzeug 1 ansteuern soll. Zur Detektion des Laserpunktes am Boden weist das Kraftfahrzeug 1 eine Kamera 18 auf. Die Kamera 18 wird aktiviert, indem ein entsprechender Empfänger am Kraftfahrzeug 1 mit dem Laserstrahl des Lasers angesteuert wird. Die Aktivierung der Kamera 18 kann dem Fahrer 17 über eine Rückmeldungsinformation angezeigt werden. Nach Aktivierung der Kamera 18 und gegebenenfalls nach Erhalt der Rückmeldungsinformation bewegt der Fahrer 17 den Laserstrahl an den Zielort. Das vom Laser emittierte Licht hebt sich markant von der Umgebung ab und ist somit aus den Bilddaten der Kamera 18 leicht extrahierbar. Um eine Zuordnung des Lasers zum Kraftfahrzeug 1 zu ermöglichen wird die Signalintensität des durch den Laser abgegebenen Lichts moduliert. Dies kann geschehen, indem beispielsweise alle fünf Sekunden für eine halbe Sekunde durch den Laser kein Licht abgestrahlt wird. Die Modulation ist beliebig variabel, es muss insbesondere sichergestellt sein, dass nicht ein beispielsweise zur Beleuchtung eines Schaufensters vorgesehener Laser von der Steuerungseinrichtung 3 des Kraftfahrzeugs 1 bei Auswertung der Bilddaten der Kamera 18 irrtümlich als Ortsinformation fehlinterpretiert wird.

Eine solche Ausgestaltung mit einem Laserpointer, der im Übrigen beispielsweise auch in Form eines Stifts oder dergleichen realisiert werden kann, erlaubt es insbesondere, auch den gesamten Ausparkweg vorzugeben. Dazu zeichnet der Fahrer 17 mit dem Laser den gewünschten Ausparkweg nach, wobei die Kamera 18 den Laserpunkt auf der Fahrbahn nachverfolgt. Durch Auswertung kann der dadurch beschriebene Weg ermittelt werden.

Statt Aktivierung der Kamera mittels des Laserlichts selbst kann dieser auch über einen am Schlüssel angeordneten Sender über die Anwesenheit des Fahrers in Kenntnis gesetzt werden. In beiden Fällen liegt mithin eine Kommunikation vor, die die grundsätzliche Anwesenheit des Fahrers 17 in der Nähe des Kraftfahrzeugs 1 als Ortsinformation anzeigt.

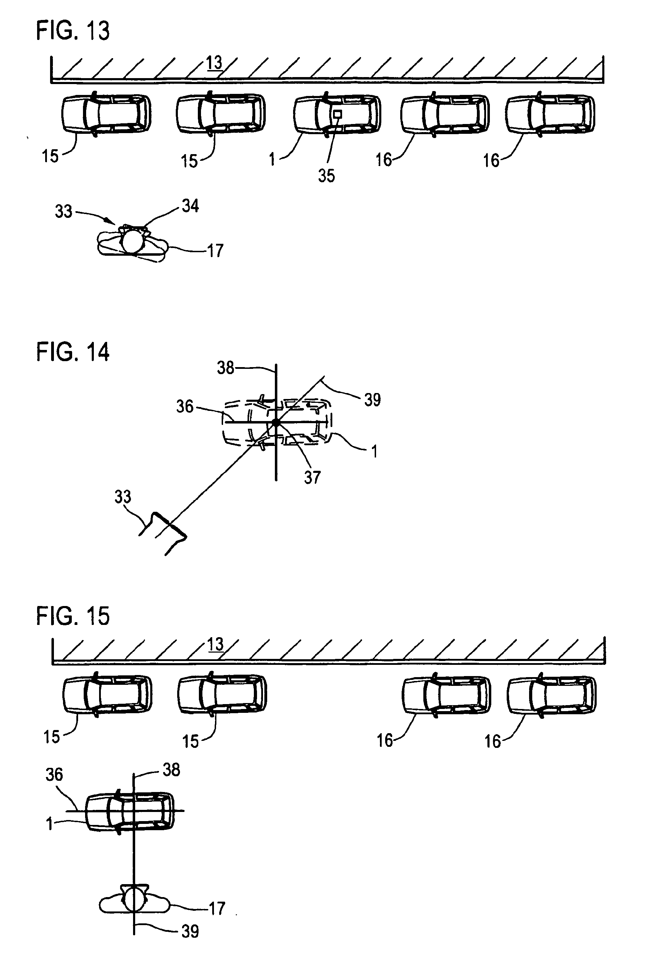

Fig. 13 zeigt eine weitere Möglichkeit zur externen Steuerung des Ausparkvorgangs mittels digitaler Kompanten 34 und 35, jeweils einer an der externen Steuerungseinrichtung und einer am Kraftfahrzeug 1. Als externe Steuerungseinrichtung kommt hier insbesondere eine Brille 33 in Betracht, wobei der Kompass 34 und ein entsprechender Sender in der Brille 33 verbaut sind. Auch das Kraftfahrzeug 1 verfügt in diesem Fall über einen Kompass 35, siehe Fig. 13. Zu Beginn des Ausparkvorgangs positioniert sich der Fahrer 17 relativ zum Kraftfahrzeug mit Blickrichtung auf das Kraftfahrzeug 1.

Das Starten des Ausparkvorgangs beginnt analog zu den bereits beschriebenen Ausgestaltungen. Die Relativposition des Fahrers 17 zum Kraftfahrzeug 1 wird durch Übermittlung einer Ortsinformation festgestellt. Dies geschieht bei Verwendung eines digitalen Kompass 34 dadurch, dass ein an oder in der Brille 33 befindlicher Sender die Signale des digitalen Kompass 34 an das Kraftfahrzeug 1 beziehungsweise einen dort vorhandenen Empfänger übermittelt. Ein Ausparkvorgang wird dadurch begonnen, dass der Fahrer 17 einen Startknopf an der Brille oder am Schlüssel 8 betätigt. Die Bestimmung der Relativposition erfolgt dadurch, dass der Fahrer 17 seinen Blick zur Mitte des Kraftfahrzeugs 1 wendet. Entsprechende Größen sind aus Fig. 14 ersichtlich.

Das Kraftfahrzeug 1 hat eine Hauptachse 36 mit einem Zentralpunkt 37, der nicht notwendigerweise in der Mitte der Hauptachse 36 liegen muss. Senkrecht zur Hauptachse 36 liegt die Querachse 38. Von der Hauptachse 36 und der Querachse 38 in einem zufälligen Winkel gelegen ist die Blickrichtung 39 des Fahrers 17. Die Lage der Hauptachse 36 im Verhältnis zur Blickrichtung 39 ergibt sich dabei durch einen Vergleich der Signale der Kompanten 34 und 35. Für diese Richtungsdaten sind Schwellwerte vorzugeben, unterhalb derer ein Feststehen der Blickrichtung festgestellt wird. Da dem Kraftfahrzeug 1 beziehungsweise seiner Steuerungseinrichtung 3 aufgrund der Signale der weiteren Sensoren 4 - 7 bekannt ist, in welche Richtung sich die Straße 14 befindet bzw. in welcher Richtung es ausparken muss, kann dementsprechend die Ortsinformation zum Steuern des Ausparkvorgangs bereits aus dem Richtungsunterschied zwischen den aus den Signalen der Kompanten 34 und 35 ermittelbaren Richtungsangaben errechnet werden. Das Kraftfahrzeug 1 wird dann solange in Richtung des Fahrers 17 bewegt, bis, wie in Fig. 15 dargestellt, die Blickrichtung 39 des Fahrers und die Querachse 38 des Kraftfahrzeugs 1 übereinstimmen. Selbstverständlich muss der zurückzulegende Weg hindernisfrei sein. Während des gesamten Ausparkvorgangs muss der Fahrer 17 in Richtung des Zentralpunkts 37 des Kraftfahrzeugs 1 blicken.

Statt einer Brille 33 kann auch ein mit einem Kompass und entsprechender Sendeeinrichtung versehener Schlüssel 8 am Kraftfahrzeug 1 ausgerichtet werden. Sinnvollerweise weist der Schlüssel 8 einen Markierungspfeil auf, um die Haltepositionierung des Schlüssels 8 relativ zum Kraftfahrzeug 1 während des Ausparkvorgangs anzugeben.

Selbstverständlich lassen sich auch bei Verwendung eines digitalen Kompass 34, 35 die bereits beschriebenen Einrichtungen zum Mitteilen einer Ortsinformation zusätzlich und in Kombination verwenden. Beispielsweise kann bei einer Kombination von GPS-Sensor 10 und digitalem Kompass 34 in der Brille 33 oder im Schlüssel 8 eine Verbesserung dahingehend erzielt werden, dass im Nahbereich, in dem die Daten des GPS-Sensors 10 nicht mehr ausreichend genau sind, um die Relativposition zwischen Kraftfahrzeug 1 und Fahrer 17 festzulegen, auf die Daten des digitalen Kompass 34 bzw. 35 zurückgegriffen wird, um den Ausparkvorgang zu vollenden.

In der einfachsten Ausgestaltung wird auch bei der Verwendung digitaler Kompanten 34 und 35, wie auch bei allen anderen Ausgestaltungen der externen Steuerungseinrichtung beziehungsweise der Ortsinformationen die Ortinformation dazu verwendet, die Ausrichtung des Kraftfahrzeugs 1 bezüglich der Straße 14 festzulegen, also ob die Front des Kraftfahrzeugs 1 nach dem Ausparkvorgang in die Fahrtrichtung der Straße 14 zeigt oder in die entgegengesetzte Richtung.

Eine Alternative zur Vorgabe einer Richtungsinformation als Ortsinformation kann mittels akustischer Signale realisiert werden. In diesem Fall weist die externe Steuerungseinrichtung eine akustische Schallquelle auf und das Kraftfahrzeug 1 einen Empfänger zur Detektion des akustischen Signals. Die Richtungsinformation wird ermittelt, indem der Empfänger am Kraftfahrzeug 1 drehbar angeordnet ist und durch Drehung des Empfängers eine richtungsabhängige Signal intensität feststellbar ist. Der Fahrer befindet sich in Richtung der höchsten Signalintensität, wobei über die gemessenen Signale auch eine Interpolation durchgeführt werden kann. Zur Aktivierung des kraftfahrzeugseitigen Empfängers drückt der Fahrer eine Taste am Schlüssel 8. Die Schallquelle und der Empfänger arbeiten im Infraschall- oder Ultraschallbereich, um den Ausparkvorgang lärmneutral durchzuführen.

## Patentansprüche

1. Kraftfahrzeug (1) mit einer zugeordneten externen Steuerungsvorrichtung und einem Park-Lenk-Assistenzsystem (2) umfassend eine kraftfahrzeugseitige Steuerungseinrichtung (3), wobei die externe Steuerungsvorrichtung zur Kommunikation mit der kraftfahrzeugseitigen Steuerungseinrichtung (3) ausgebildet ist und die kraftfahrzeugseitige Steuerungseinrichtung (3) unter Berücksichtigung der im Rahmen der Kommunikation übertragenen Signale zur Ermittlung einer Ortsinformation über den Aufenthaltsort des Fahrers (17) und/oder einen vom Fahrer (17) vorgegebenen Zielort ausgebildet ist, wobei ein durch die kraftfahrzeugseitige Steuerungseinrichtung (3) gesteuerter Ausparkvorgang unter Berücksichtigung der Ortsinformation durchführbar ist **dadurch gekennzeichnet,**
**dass** die externe Steuerungsvorrichtung einen bildgebenden Sensor und das Kraftfahrzeug wenigstens zwei durch den bildgebenden Sensor erfassbare Marker aufweist, wobei die externe Steuerungsvorrichtung zur Auswertung der Bilddaten des bildgebenden Sensors und zur Ermittlung der Ortsinformation unter Berücksichtigung des Auswertungsergebnisses ausgebildet ist.

2. Kraftfahrzeug nach Anspruch 1,
**dadurch gekennzeichnet,**
**dass** die externe Steuerungsvorrichtung als Schlüssel (8, 22), Brille, Uhr oder als mobile Kommunikationseinrichtung, insbesondere als Mobiltelefon (30) oder mobiles Medienabspielgerät, ausgebildet ist.

3. Kraftfahrzeug nach einem der Ansprüche 1 oder 2,
**dadurch gekennzeichnet,**
**dass** die externe Steuerungsvorrichtung und das Kraftfahrzeug (1) einen oder mehrere GPS-Sensoren (10, 12) aufweisen, mit denen die Ortsinformationen ermittelbar sind.

4. Kraftfahrzeug nach einem der vorangehenden Ansprüche,
**dadurch gekennzeichnet,**
**dass** die externe Steuerungsvorrichtung zum kontinuierlichen oder intermittierenden Aussenden eines Signals an das Kraftfahrzeug (1) ausgebildet ist, das Kraftfahrzeug (1) wenigstens zwei, insbesondere drei, Sensoren (23) zum Erfassen des Signals aufweist und die kraftfahrzeugseitige Steuerungseinrichtung (3) zur Ermittlung der Ortsinformation unter Berücksichtigung der Sensorinformationen ausgebildet ist.

5. Kraftfahrzeug nach einem der vorangehenden Ansprüche,
**dadurch gekennzeichnet,**
**dass** der bildgebende Sensor eine Infrarotkamera (31) ist und die Marker Infrarotmarker (25, 26, 27, 28, 29) sind.

6. Kraftfahrzeug nach einem der vorangehenden Ansprüche,
**dadurch gekennzeichnet,**
**dass** das Kraftfahrzeug (1) eine Kamera (18) aufweist und die kraftfahrzeugseitige Steuerungseinrichtung (3) zur Auswertung der mit der Kamera (18) aufgenommenen Bilddaten ausgebildet ist, um eine aus Handzeichen des Fahrers (17) abgeleitete Steuerungsinformation für den Ausparkvorgang zu ermitteln.

7. Kraftfahrzeug nach einem der Ansprüche 1 bis 5,
**dadurch gekennzeichnet,**
**dass** die externe Steuerungsvorrichtung einen Handzeichen des Fahrers (17) als Sensordaten sensierenden Beschleunigungssensor (32) aufweist, wobei eine aus den Sensordaten abgeleitete Steuerungsinformation durch die kraftfahrzeugseitige Steuerungseinrichtung (3) zur Steuerung des Ausparkvorgangs verwendbar ist.

8. Kraftfahrzeug nach einem der Ansprüche 1 bis 5,
**dadurch gekennzeichnet,**
**dass** das Kraftfahrzeug (1) eine Kamera (18) aufweist und die externe Steuerungseinrichtung zur Gabe eines Laserlichtpunktes ausgebildet ist, wobei die kraftfahrzeugseitige Steuerungseinrichtung (3) zur Auswertung der mit der Kamera (18) aufgenommenen Bilddaten ausgebildet ist und ein in den Bilddaten abgebildeter Laserlichtpunkt als vom Fahrer vorgegebener Zielort interpretierbar ist.

9. Kraftfahrzeug nach einem der vorangehenden Ansprüche,
**dadurch gekennzeichnet,**
**dass** die externe Steuerungsvorrichtung und das Kraftfahrzeug (1) jeweils einen digitalen Kompass (34, 35) enthalten und die kraftfahrzeugseitige Steuerungseinrichtung (3) zur Ermittlung der Ortsinformation unter Berücksichtigung der Daten der digitalen Kompanten (34, 35) ausgebildet ist.

10. Kraftfahrzeug nach einem der vorangehenden Ansprüche,
**dadurch gekennzeichnet,**
**dass** die externe Steuerungsvorrichtung eine Informationseinrichtung (11) aufweist, mit der dem Fahrer (17) eine Rückmeldungsinformation über den Empfang der Ortsinformation durch die kraftfahrzeugseitige Steuerungseinrichtung gebbar ist.

11. Kraftfahrzeug nach Anspruch 10,
**dadurch gekennzeichnet,**
**dass** die Rückmeldungsinformation eine akustische und/oder haptische und/oder optische Rückmeldungsinformation ist.

12. Kraftfahrzeug nach einem der vorangehenden Ansprüche,
**dadurch gekennzeichnet,**
**dass** die kraftfahrzeugseitige Steuerungseinrichtung (3) zur Kommunikation mittels Bluetooth oder WPA mit der externen Steuerungsvorrichtung ausgebildet ist.

13. Externe Steuerungsvorrichtung für ein Kraftfahrzeug (1), insbesondere ein Kraftfahrzeug nach einem der Ansprüche 1 bis 12, mit einem Park-Lenk-Assistenzsystem (2) umfassend eine kraftfahrzeugseitige Steuerungseinrichtung (3), wobei die externe Steuerungsvorrichtung zur Kommunikation mit der kraftfahrzeugseitigen Steuerungseinrichtung (3) ausgebildet ist, um im Rahmen der Kommunikation der kraftfahrzeugseitigen Steuerungseinrichtung (3) eine Ortsinformation über den Aufenthaltsort des Fahrers (17) ermittelbar zu machen, wobei ein durch die kraftfahrzeugseitige Steuerungseinrichtung (3) gesteuerter Ausparkvorgang unter Berücksichtigung der Ortsinformation kontrollierbar ist **dadurch gekennzeichnet,**
**dass** die externe Steuerungsvorrichtung einen bildgebenden Sensor aufweist, um wenigstens zwei durch den bildgebenden Sensor erfassbare, am Kraftfahrzeug (1) angeordnete, Marker zu erfassen, wobei die externe Steuerungsvorrichtung zur Auswertung der Bilddaten des bildgebenden Sensors und zur Ermittlung der Ortsinformation unter Berücksichtigung des Auswertungsergebnisses ausgebildet ist.

14. Externe Steuerungsvorrichtung nach Anspruch 13,
**dadurch gekennzeichnet,**
**dass** die externe Steuerungsvorrichtung als Schlüssel (8, 22) oder als mobile Kommunikationseinrichtung, insbesondere als Mobiltelefon (30), ausgebildet ist.

15. Externe Steuerungsvorrichtung nach einem der Ansprüche 13 oder 14, **dadurch gekennzeichnet,**
**dass** die externe Steuerungsvorrichtung einen oder mehrere GPS-Sensoren (10) aufweist, mit dem die Ortsinformation ermittelbar ist.

16. Externe Steuerungsvorrichtung nach einem der Ansprüche 13 bis 15, **dadurch gekennzeichnet,**
**dass** die externe Steuerungsvorrichtung zum kontinuierlichen oder intermittierenden Aussenden eines Signals an das Kraftfahrzeug ausgebildet ist, um von wenigstens zwei, insbesondere drei, Sensoren (23) des Kraftfahrzeugs (1) empfangen zu werden, sodass die Ermittlung der Ortsinformation durch die kraftfahrzeugseitige Steuerungseinrichtung (3) unter Berücksichtigung der Sensordaten ermöglicht ist.

17. Externe Steuerungsvorrichtung nach einem der Ansprüche 13 bis 16, **dadurch gekennzeichnet,**
**dass** der bild gebende Sensor eine am Kraftfahrzeug befindliche Infrarotmarker (25, 26, 27, 28, 29) sensierende Infrarotkamera (31) ist.

18. Externe Steuerungsvorrichtung nach einem der Ansprüche 13 bis 17, **dadurch gekennzeichnet,**
**dass** die externe Steuerungsvorrichtung einen Handzeichen des Fahrers als Sensordaten sensierenden Beschleunigungssensor (32) aufweist, wobei eine aus den Sensordaten abgeleitete Steuerungsinformation durch die kraftfahrzeugseitige Steuerungseinrichtung (3) zur Steuerung des Ausparkvorgangs verwendbar ist.

19. Externe Steuerungsvorrichtung nach einem der Ansprüche 13 bis 18, **dadurch gekennzeichnet,**
**dass** die externe Steuerungsvorrichtung einen digitalen Kompass (34) enthält, um der kraftfahrzeugseitigen Steuerungseinrichtung (3) die Ermittlung der Ortsinformation unter Berücksichtigung der Daten des digitalen Kompass (34) zu ermöglichen.

20. Externe Steuerungsvorrichtung nach einem der Ansprüche 13 bis 19, **dadurch gekennzeichnet,**
**dass** die externe Steuerungsvorrichtung eine Informationseinrichtung (11) aufweist, mit der dem Fahrer eine Rückmeldungsinformation über den Empfang der Ortsinformation durch die kraftfahrzeugseitige Steuerungseinrichtung gebbar ist.

21. Externe Steuerungsvorrichtung nach Anspruch 20,
**dadurch gekennzeichnet,**
**dass** die Rückmeldungsinformation eine akustische und/oder haptische und/oder optische Rückmeldungsinformation ist.

22. Externe Steuerungsvorrichtung nach einem der Ansprüche 13 bis 21, **dadurch gekennzeichnet,**
**dass** sie zur Kommunikation mittels Bluetooth oder WPA mit der kraftfahrzeugseitigen Steuerungseinrichtung (3) ausgebildet ist.

23. Externe Steuerungsvorrichtung für ein Kraftfahrzeug nach einem der Ansprüche 13 bis 22,
**dadurch gekennzeichnet,**
**dass** in der externen Steuerungsvorrichtung die Position des Kraftfahrzeugs (1) abspeicherbar ist und die externe Steuerungsvorrichtung zur Ausgabe einer Information bezogen auf die Position des Kraftfahrzeugs (1) ausgebildet ist.

24. Verfahren zum Durchführen eines Ausparkvorgangs eines Kraftfahrzeugs (1), insbesondere ein Kraftfahrzeug (1) nach einem der Ansprüche 1 bis 12, mit einer zugeordneten externen Steuerungsvorrichtung, insbesondere nach einem der Ansprüche 13 bis 23, und einem Park-Lenk-Assistenzsystem (2) umfassend eine kraftfahrzeugseitige Steuerungseinrichtung (3), wobei die externen Steuerungsvorrichtung mit der kraftfahrzeugseitigen Steuerungseinrichtung (3) kommuniziert und die kraftfahrzeugseitige Steuerungseinrichtung (3) unter Berücksichtigung der Kommunikation eine Ortsinformation über den Aufenthaltsort des Fahrers (17) ermittelt, wobei die kraftfahrzeugseitige Steuerungseinrichtung (3) den Ausparkvorgang unter Berücksichtigung der Ortsinformation steuert,
**dadurch gekennzeichnet,**
**dass** die externe Steuerungsvorrichtung einen bildgebenden Sensor aufweist, um wenigstens zwei durch den bildgebenden Sensor erfassbare, am Kraftfahrzeug (1) angeordnete, Marker zu erfassen, wobei die externe Steuerungsvorrichtung zur Auswertung der Bilddaten des bildgebenden Sensors und zur Ermittlung der Ortsinformation unter Berücksichtigung des Auswertungsergebnisses ausgebildet ist.

## Claims

1. Motor vehicle (1) having an associated external control device and a parking steering assistance system (2) comprising a motor-vehicle-side control apparatus (3), the external control device being designed to communicate with the motor-vehicle-side control apparatus (3) and the motor-vehicle-side control apparatus (3) being designed to determine location information about the whereabouts of the driver (17) and/or a target location preset by the driver (17) in consideration of the signals transmitted in the context of the communication, it being possible for a process of moving out of a parking space, which process is controlled by the motor-vehicle-side control apparatus (3), to be carried out in consideration of the location information, **characterised in that** the external control device comprises an imaging sensor and the motor vehicle comprises at least two markers which can be detected by the imaging sensor, the external control device being designed to evaluate the image data of the imaging sensor and to determine the location information in consideration of the result of the evaluation.

2. Motor vehicle according to claim 1, **characterised in that** the external control device is designed as a key (8, 22), a pair of glasses, a watch or as a mobile communication apparatus, in particular as a mobile telephone (30) or mobile media player.

3. Motor vehicle according to either claim 1 or claim 2, **characterised in that** the external control device and the motor vehicle (1) comprise one or more GPS sensors (10, 12) by means of which the location information can be determined.

4. Motor vehicle according to any of the preceding claims, **characterised in that** the external control device is designed to send a signal to the motor vehicle (1) continuously or intermittently, the motor vehicle (1) comprises at least two, in particular three, sensors (23) for picking up the signal and the motor-vehicle-side control apparatus (3) is designed to determine the location information in consideration of the sensor information.

5. Motor vehicle according to any of the preceding claims, **characterised in that** the imaging sensor is an infrared camera (31) and the markers are infrared markers (25, 26, 27, 28, 29).

6. Motor vehicle according to any of the preceding claims, **characterised in that** the motor vehicle (1) comprises a camera (18) and the motor-vehicle-side control apparatus (3) is designed to evaluate the image data recorded by means of the camera (18) in order to determine control information for the process of moving out of a parking space, which information is derived from hand signals of the driver (17).

7. Motor vehicle according to any of claims 1 to 5, **characterised in that** the external control device comprises an acceleration sensor (32) which senses hand signals of the driver (17) as sensor data, it being possible for control information derived from the sensor data to be used by the motor-vehicle-side control apparatus (3) to control the process of moving out of a parking space.

8. Motor vehicle according to any of claims 1 to 5, **characterised in that** the motor vehicle (1) comprises a camera (18) and the external control apparatus is designed to output a laser light spot, the motor-vehicle-side control apparatus (3) being designed to evaluate the image data recorded by means of the camera (18) and it being possible for a laser light spot reproduced in the image data to be interpreted as a target location preset by the driver.

9. Motor vehicle according to any of the preceding claims, **characterised in that** the external control device and the motor vehicle (1) each contain a digital compass (34, 35) and the motor-vehicle-side control apparatus (3) is designed to determine the location information in consideration of the data of the digital compasses (34, 35).

10. Motor vehicle according to any of the preceding claims, **characterised in that** the external control device comprises an information apparatus (11) by means of which feedback information about the receipt of the location information by the motor-vehicle-side control apparatus can be given to the driver (17).

11. Motor vehicle according to claim 10, **characterised in that** the feedback information is acoustic and/or haptic and/or optical feedback information.

12. Motor vehicle according to any of the preceding claims, **characterised in that** the motor-vehicle-side control apparatus (3) is designed to communicate with the external control device by means of Bluetooth or WPA.

13. External control device for a motor vehicle (1), in particular a motor vehicle according to any of claims 1 to 12, having a parking steering assistance system (2) comprising a motor-vehicle-side control apparatus (3), the external control device being designed to communicate with the motor-vehicle-side control apparatus (3) in order, within the context of the communication of the motor-vehicle-side control apparatus (3), to make location information about the whereabouts of the driver (17) determinable, a process of moving out of a parking space, which process is controlled by the motor-vehicle-side control apparatus (3), being controllable in consideration of the location information, **characterised in that** the external control device comprises an imaging sensor in order to detect at least two markers which are arranged on the motor vehicle (1) and can be detected by the imaging sensor, the external control device being designed to evaluate the image data of the imaging sensor and to determine the location information in consideration of the result of the evaluation.

14. External control device according to claim 13, **characterised in that** the external control device is designed as a key (8, 22) or as a mobile communication apparatus, in particular as a mobile telephone (30).

15. External control device according to either claim 13 or claim 14, **characterised in that** the external control device comprises one or more GPS sensors (10) by means of which the location information can be determined.

16. External control device according to any of claims 13 to 15, **characterised in that** the external control device is designed to send a signal to the motor vehicle continuously or intermittently, to be received by at least two, in particular three, sensors (23) of the motor vehicle (1) so as to make it possible for the motor-vehicle-side control apparatus (3) to determine the location information in consideration of the sensor data.

17. External control device according to any of claims 13 to 16, **characterised in that** the imaging sensor is an infrared camera (31) which senses infrared markers (25, 26, 27, 28, 29) located on the motor vehicle.

18. External control device according to any of claims 13 to 17, **characterised in that** the external control device comprises an acceleration sensor (32) which senses hand signals of the driver as sensor data, it being possible for control information derived from the sensor data to be used by the motor-vehicle-side control apparatus (3) to control the process of moving out of a parking space.

19. External control device according to any of claims 13 to 18, **characterised in that** the external control device contains a digital compass (34) in order to make it possible for the motor-vehicle-side control apparatus (3) to determine the location information in consideration of the data of the digital compass (34).

20. External control device according to any of claims 13 to 19, **characterised in that** the external control device comprises an information apparatus (11) by means of which feedback information about the receipt of the location information by the motor-vehicle-side control apparatus can be given to the driver.

21. External control device according to claim 20, **characterised in that** the feedback is acoustic and/or haptic and/or optical feedback information.

22. External control device according to any of claims 13 to 21, **characterised in that** it is designed to communicate with the motor-vehicle side control apparatus (3) by means of Bluetooth or WPA.

23. External control device for a motor vehicle according to any of claims 13 to 22, **characterised in that** the position of the motor vehicle (1) can be stored in the external control device and the external control device is designed to output information on the basis of the position of the motor vehicle (1).

24. Method for carrying out a process of moving a motor vehicle (1), in particular a motor vehicle (1) according to any of claims 1 to 12, out of a parking space using an associated external control device, in particular according to any of claims 13 to 23, and a parking steering assistance system (2) comprising a motor-vehicle side control apparatus (3), the external control device communicating with the motor-vehicle side control apparatus (3) and the motor-vehicle side control apparatus (3) determining location information about the whereabouts of the driver (17) in consideration of the communication, the motor-vehicle side control apparatus (3) controlling the process of moving out of a parking space in consideration of the location information, **characterised in that** the external control device comprises an imaging sensor in order to detect at least two markers which,are arranged on the motor vehicle (1) and can be detected by the imaging sensor, the external control device being designed to evaluate the image data of the imaging sensor and to determine the location information in consideration of the result of the evaluation.

## Revendications

1. Véhicule automobile (1) présentant un dispositif de commande externe affecté et un système d'assistance aux manoeuvre de stationnement (2) comprenant un dispositif de commande (3) sur le côté du véhicule automobile, dans lequel le dispositif de commande externe est conçu pour communiquer avec le dispositif de commande (3) sur le côté du véhicule automobile et le dispositif de commande (3) sur le côté du véhicule automobile est conçu en tenant compte des signaux transmis dans le cadre de la communication pour déterminer une information locale sur le lieu de stationnement du conducteur (17) et/ou d'un lieu cible affecté par le conducteur (17), dans lequel une opération de sortie de stationnement commandée par le dispositif de commande (3) sur le côté du véhicule automobile peut être réalisée en tenant compte de l'information locale,
**caractérisé en ce que** :
le dispositif de commande externe présente un capteur générateur d'image et le véhicule automobile au moins deux marqueurs qui peuvent être détectés par le capteur générateur d'image, dans lequel le dispositif de commande externe est conçu de manière à évaluer les données d'image du capteur générateur d'image et à déterminer l'information locale en tenant compte du résultat de l'évaluation.

2. Véhicule automobile selon la revendication 1, **caractérisé en ce que** :
le dispositif de commande externe se présente sous la
forme d'une clé (8, 22), de lunettes, d'une montre ou sous la forme d'un dispositif de communication mobile, en particulier sous la forme d'un téléphone mobile (30) ou d'un lecteur de média mobile.

3. Véhicule automobile selon l'une quelconque des
revendications 1 ou 2,
**caractérisé en ce que** :
le dispositif de commande externe et le véhicule automobile (1) présentent un ou plusieurs capteurs GPS (10, 12), avec le ou lesquels les informations locales peuvent être déterminées.

4. Véhicule automobile selon l'une quelconque des
revendications précédentes,
**caractérisé en ce que** :
le dispositif de commande externe est conçu pour émettre en continu ou de manière intermittente un signal sur le véhicule automobile (1), le véhicule automobile (1) présente au moins deux, en particulier trois capteurs (23) pour détecter le signal et le dispositif de commande (3) sur le côté du véhicule automobile est conçu pour déterminer l'information locale en tenant compte des informations des capteurs.

5. Véhicule automobile selon l'une quelconque des
revendications précédentes,
**caractérisé en ce que** :
le capteur générateur d'image est une caméra infrarouge (31) et les marqueurs sont des marqueurs infrarouges (25, 26, 27, 28, 29).

6. Véhicule automobile selon l'une quelconque des
revendications précédentes,
**caractérisé en ce que** :
le véhicule automobile (1) présente une caméra (18) et le dispositif de commande (3) sur le côté du véhicule automobile est conçu pour évaluer les données d'image prises avec la caméra (18) pour obtenir des informations de commande tirées du signe de la main du conducteur (17) pour l'opération de sortie de place de stationnement.

7. Véhicule automobile selon l'une quelconque des
revendications 1 à 5,
**caractérisé en ce que** :
le dispositif de commande externe présente un capteur d'accélération (32) captant comme données un signe de la main du conducteur (17), dans lequel une information de commande tirée des données du capteur peut être utilisée par le dispositif de commande (3) sur le côté du véhicule automobile pour commander l'opération de sortie de la place de stationnement.

8. Véhicule automobile selon l'une quelconque des
revendications 1 à 5,
**caractérisé en ce que** :
le véhicule automobile (1) présente une caméra (18) et le dispositif de commande externe est conçu pour fournir un point lumineux de laser, dans lequel le dispositif de commande (3) sur le côté du véhicule automobile est conçu pour évaluer les données d'image prises par la caméra (18) et un point lumineux de laser formé dans les données d'image peut être interprété comme lieu cible affecté par le conducteur.

9. Véhicule automobile selon l'une quelconque des
revendications précédentes,
**caractérisé en ce que** :
le dispositif de commande externe et le véhicule automobile (1) contiennent respectivement un compas numérique (34, 35) et le dispositif de commande (3) sur le côté du véhicule automobile est conçu pour déterminer l'information locale en tenant compte des données des compas numériques (34, 35).

10. Véhicule automobile selon l'une quelconque des
revendications précédentes,
**caractérisé en ce que** :
le dispositif de commande externe présente un dispositif d'information (11), avec lequel il peut être fourni au conducteur (17) une information d'accusé de réception sur la réception de l'information locale par le dispositif de commande sur le côté du véhicule automobile.

11. Véhicule automobile selon la revendication 10, **caractérisé en ce que** :
l'information d'accusé de réception est une
information d'accusé de réception acoustique et/ou haptique et/ou optique.

12. Véhicule automobile selon l'une quelconque des
revendications précédentes,
**caractérisé en ce que** :
le dispositif de commande (3) sur le côté du véhicule automobile est conçu pour communiquer au moyen du système Bluetooth ou WPA avec le dispositif de commande externe.

13. Dispositif de commande externe pour un véhicule automobile (1), en particulier un véhicule automobile selon l'une quelconque des revendications 1 à 12, comprenant un système d'assistance aux manoeuvres de stationnement (2) comprenant un dispositif de commande (3) sur le côté du véhicule automobile, dans lequel le dispositif de commande externe est conçu pour communiquer avec le dispositif de commande (3) sur le côté du véhicule automobile afin de permettre de déterminer, dans le cadre de la communication du dispositif de commande (3) sur le côté du véhicule automobile, une information locale sur le lieu d'emplacement du conducteur (17), dans lequel une opération de sortie de place de stationnement commandée par le dispositif de commande (3) sur le côté du véhicule automobile peut être contrôlée en tenant compte de l'information locale,
**caractérisé en ce que** :
le dispositif de commande externe présente un capteur
générateur d'image pour détecter au moins deux marqueurs détectables par le capteur générateur d'image et aménagés sur le véhicule automobile (1), dans lequel le dispositif de commande externe est conçu pour évaluer les données d'image du capteur générateur d'image et pour déterminer l'information locale en tenant compte du résultat de l'évaluation.

14. Dispositif de commande externe selon la
revendication 13,
**caractérisé en ce que** :
le dispositif de commande externe se présente sous la forme d'une clé (8, 22) ou d'un dispositif de communication mobile, en particulier sous la forme d'un téléphone mobile (30).

15. Dispositif de commande externe selon l'une
quelconque des revendications 13 ou 14, **caractérisé en ce que** :
le dispositif de commande externe présente un ou
plusieurs capteurs GPS (10), avec le ou lesquels il est possible de déterminer l'information locale.

16. Dispositif de commande externe selon l'une
quelconque des revendications 13 à 15,
**caractérisé en ce que** :
le dispositif de commande externe est conçu pour émettre en continu ou de manière intermittente un signal sur le véhicule automobile afin de recevoir le signal par au moins deux, en particulier trois capteurs (23) du véhicule automobile (1) de sorte que la détermination de l'information locale par le dispositif de commande (3) sur le côté du véhicule automobile soit autorisée en tenant compte des données de capteur.

17. Dispositif de commande externe selon l'une
quelconque des revendications 13 à 16,
**caractérisé en ce que** :
le capteur générateur d'image est une caméra infrarouge (31) captant des marqueurs infrarouges (25, 26, 27, 28, 29) qui se trouvent sur le véhicule automobile.

18. Dispositif de commande externe selon l'une
quelconque des revendications 13 à 17,
**caractérisé en ce que** :
le dispositif de commande externe présente un capteur d'accélération (32) détectant comme données de capteur un signe de la main du conducteur, dans lequel une information de commande tirée des données de capteur peut être utilisée par le dispositif de commande (3) sur le côté du véhicule automobile pour commander l'opération de sortie de place de stationnement.

19. Dispositif de commande externe selon l'une
quelconque des revendications 13 à 18,
**caractérisé en ce que** :
le dispositif de commande externe contient un compas numérique (34) pour permettre au dispositif de commande (3) sur le côté du véhicule automobile de déterminer l'information locale en tenant compte des données du compas numérique (34).

20. Dispositif de commande externe selon l'une
quelconque des revendications 13 à 19,
**caractérisé en ce que** :
le dispositif de commande externe présente un dispositif d'information (11), avec lequel il peut être fourni au conducteur une information d'accusé de réception sur la réception de l'information locale par le dispositif de commande sur le côté du véhicule automobile.

21. Dispositif de commande externe selon la
revendication 20,
**caractérisé en ce que** :
l'information d'accusé de réception est une information d'accusé de réception acoustique et/ou haptique et/ou optique.

22. Dispositif de commande externe selon l'une
quelconque des revendications 13 à 21,
**caractérisé en ce qu'**il est conçu pour communiquer au
moyen du système Bluetooth ou VAPA avec le dispositif de commande (3) sur le côté du véhicule automobile.

23. Dispositif de commande externe pour un véhicule automobile selon l'une quelconque des revendications 13 à 22,
**caractérisé en ce que** :
on peut stocker dans le dispositif de commande externe
la position du véhicule automobile (1) et le dispositif de commande externe est conçu pour délivrer une information par rapport à la position du véhicule automobile (1).

24. Procédé de réalisation d'une opération de sortie d'une place de stationnement d'un véhicule automobile (1), en particulier un véhicule automobile (1) selon l'une quelconque des revendications 1 à 12, présentant un dispositif de commande externe affecté, en particulier selon l'une quelconque des revendications 13 à 23, et un système d'assistance aux manoeuvres de stationnement (2) comprenant un dispositif de commande (3) sur le côté du véhicule automobile, dans lequel le dispositif de commande externe communique avec le dispositif de commande (3) sur le côté du véhicule automobile et le dispositif de commande (3) sur le côté du véhicule automobile détermine en tenant compte de la communication une information locale sur le lieu d'emplacement du conducteur (17), dans lequel le dispositif de commande (3) sur le côté du véhicule automobile commande l'opération de sortie de place de stationnement en tenant compte de l'information locale,
**caractérisé en ce que** :
le dispositif de commande externe présente un capteur
générateur d'image pour détecter au moins deux marqueurs détectables par le capteur générateur d'image et agencés sur le véhicule automobile (1), dans lequel le dispositif de commande externe est conçu pour évaluer les données d'image du capteur générateur d'image et pour déterminer l'information locale en tenant compte du résultat de l'évaluation.
